# EUROPEAN PATENT SPECIFICATION

(11) **EP 2 342 101 B1**
(45) Date of publication and mention of the grant of the patent: **22.05.2013**
(21) Application number: 08875829.7
(22) Date of filing: 20.10.2008
(51) Int. Cl.: B60R 21/015

(54) **A VEHICLE CAMERA**
FAHRZEUGKAMERA
CAMÉRA EMBARQUÉE

(43) Date of publication of application: 13.07.2011
(73) Proprietor: Sabanci Universitesi, 34956 Tuzla-Istambul (TR)
(72) Inventor: ERÇIL, Aytül, 34956 Istanbul (TR); SAKMAN, Hakan, Kocaeli (TR)
(74) Representative: Dericioglu, Ekin
(86) International application number: PCT/IB2008/054295
(87) International publication number: WO 2010/046725

(56) References cited:
- JP-A- 63 038 058
- US-B1- 6 324 453

## Description

### Field of the Invention

The present invention relates to vehicle cameras, which will observe the drivers of motor vehicles such as cars, buses and trucks and wherein CMOS sensors too small to be visible by the driver are used during driving.

### Prior Art

Cameras are being used more and more in motor vehicles for intelligent applications such as lane detection, helping the driver in parking and etc. There are several studies for monitoring the state of the driver to analyze the drowsiness of the driver. One of the best methods is to use the information obtained by observing the driver's face using a visual system.

The European patent document No. EP1418089 discloses a system with a multifunctional integrated visual sensor using a CMOS or CCD technology matrix having a sensitive area whose each part has a different functionality.

The USA patent document No. US2007222617 discloses a vision based alert system with a portable camera. The alert system is activated when predefined visual events are detected. It is used to detect events like vehicle lane departure or driver drowsiness.

The French patent document No. FR2886239 discloses a CMOS type image sensor placed on the back of the vehicle. The screen, where the optical information coming from the sensor is analyzed and reconstructed, is placed in front of the driver.

The USA patent document No. US7110570 discloses an imaging system that provides vehicle security. This system absorbs the infrared signals within the predetermined field-of-view. Upon processing the signals received from the objects within the field-of-view, the human face is detected to identify and track the person by means of the processor containing a face recognition software.

The USA patent document No. US6724920 relates to application of human facial features recognition system to vehicle safety. The system ensures that once a face is detected, it can be compared to a data base to identify the person.

The USA patent document No. US634453 relates to a vehicle camera of an interior monitoring system according to the preamble of claim 1 to identify occupants, including their parts and other objects in the passenger compartment and objects outside of a motor vehicle.

It is very difficult to observe the driver for drowsiness and other behaviors with the cameras in the state of the art without distracting the driver. The cameras currently used have sizes that distract the driver and due to their size they have to be positioned to the right or to the left of the driver. This restriction in the positioning causes a huge loss in the visual information received and provides unacceptable images in most of the lighting conditions.

### Summary of the Invention

The objective of the present invention is to obtain the most accurate visual data by using CMOS image sensors, avoiding the information loss encountered in the conventional cameras, to view the driver from right in front to observe the driver for drowsiness and other behaviors without distracting the driver.

A vehicle camera has been provided as defined by the features of claim 1.

### Detailed Description of the Invention

The "A Vehicle Camera" realized to fulfill the objective of the present invention is illustrated in the accompanying figure, in which,

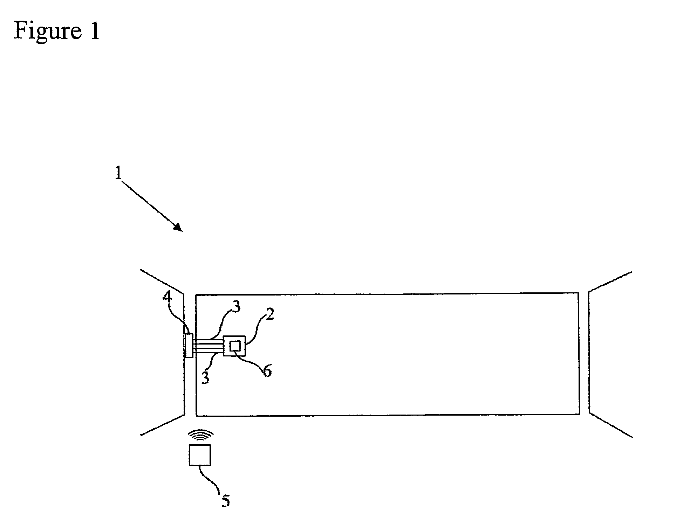

Figure 1 is a view of the application of the inventive Vehicle Camera.

The components in the figure are numbered individually where the numbers refer to the following:
1. A vehicle camera
2. Sensor
3. Cable
4. Camera
5. Controller
6. Lens

The inventive vehicle camera (1) comprises at least one CMOS image sensor (2) placed on the windshield of the motor vehicles like cars, buses or trucks such that it will view the driver from right in front and it will not distract the driver; at least one cable (3) which is connected to the image sensor (2) and which transfers the information obtained by means of the image sensor (2); a camera (4) which is located at the end of the cable (3) to evaluate the signals coming from the sensor (2) and to send the acquired images frame by frame to the controller (5); and at least one lens (6) placed on the image sensor (2).

The very small CMOS image sensor (2) designed to be almost invisible, will be placed on the windshield of the car, bus or truck such that it will view the driver from right in front and it will not distract the driver. With the advantage provided by its size, the camera (4) offers the freedom to be positioned anywhere desired. This flexibility ensures that the vision based algorithms such as lane detection, detection of driver drowsiness, obstacle identification, parking aid, etc. give the best results.

The information received from the image sensor (2) is sent to the camera (4) via a very thin cable (3) through the windshield. There is a camera (4) on the receiving end of the cable (3) for evaluating the signals coming from the sensor (2) and sending the acquired images frame by frame to the controller (5).

A four cable connection is used between the image sensor (2) and the camera (4) and these cables (3) are realized with flex-cable technology. Since the cables (3) used in the said connection are thin and transparent, they are not noticed by the driver and they do not restrict the vision of the driver.

The CMOS image sensor (2) operates under both very low and very high lighting conditions. By means of the shared structure of the image sensor (2) and the camera (4), reflections from the face are eliminated. A very small and thin custom designed lens (6) will be used together with the CMOS image sensor (2). The said lens (6) serves as the camera lens in a normal camera and projects the image on the sensor (2) at a certain angle.

The resolution of the CMOS image sensor (2) is 154 x 114 (effective 150 x 110), and its size is 2mm x 1.5mm. Additionally, in the 0.35 micron technology, it has 10 um pixel size. This way, it becomes sensitive to the infrared rays at night-time conditions and when it is placed within the vehicle right in front of the driver, it is not noticed by the driver.

The power required by the CMOS image sensor (2) is generated by the camera (4) located at the side bar. The power generated by the camera (4) is delivered to the image sensor (2) by means of two of the four cables (3) located between the camera (4) and the sensor (2). With the other two cables (3), the pixel values are delivered to the camera using LVDS (Low-voltage differential signaling) technique. When the CMOS image sensor (2) is sending the pixel value to the camera (4), it stops sending the pixel value for a certain period of time both at the gaps between two lines and the gaps between two frames. These gaps are called "linebreak" and "framebreak" respectively. Within these "linebreak" and "framebreak" periods, the camera (4) communicates by these two cables (3), over which pixel values are sent, in the reverse direction and sends certain control information such as on/off time and photon accumulation time to the sensor (2).

## Claims

1. A vehicle camera (1) for observing drivers of motor vehicles like cars, buses and trucks, **comprising** a cable (3) providing signal and power transfer, at least one camera (4) located at an end of the cable (3) which is used as a power supply and which enables transfer of information and at least one controller (5) which receives the information transferred by the camera (4) **characterized by** a CMOS image sensor (2), which is placed on the windshield of motor vehicle right in front of the driver's face and to which the cable (3) is connected and at least one lens (6) placed on the sensor (2).

2. A vehicle camera (1) according to Claim 1, **characterized by** at least four cables (3) for transfer of information and pixel between the camera (4) and the sensor (2), wherein two of the cables are used in power transfer and the other two are used in transfer of pixel values to the camera (4) by the LVDS technique.

3. A vehicle camera (1) according to any of the preceding claims, **characterized by** cables (3) used bidirectionally for transfer of pixel values to the camera and in the "linebreak" and "framebreak" gaps where the CMOS image sensor (2) stops sending pixel values, for transfer of certain information such as on/off time and photon accumulation time from the camera (4) to the sensor (2).

## Patentansprüche

1. Eine Fahrzeugkamera (1) zur Beobachtung der Fahrer von Kraftfahrzeugen wie Autos, Busse und Lastwagen **umfassend** ein Kabel (3), das ein Signal und Energieübertragung bereitstellt, mindestens eine an einem Ende des Kabels (3) angeordnete Kamera (4), welches als Leistungsversorgung eingesetzt ist und die Datenübertragung bereitstellt und mindestens einen Regler (5), der die von der Kamera (4) übertragene Information empfängt, **gekennzeichnet durch** einen CMOS Bildsensor (2), die auf der Frontscheibe des Kraftfahrzeugs gerade vor dem Gesicht des Fahrers angeordnet ist und an dem das Kabel (3) angeschlossen ist und mindestens eine Linse (6), die am Sensor (2) angeordnet ist.

2. Eine Fahrzeugkamera (1) nach Anspruch 1, **gekennzeichnet durch** mindestens vier Kabel (3) zur Übertragung von Informationen und Bildpunkten zwischen der Kamera (4) und dem Sensor (2), wobei zwei von den Kabeln bei der Energieübertragung und die anderen zwei bei der Übertragung von Bildpunktelementen zur Kamera (4) **durch** LVDS-Technik eingesetzt werden.

3. Eine Fahrzeugkamera (1) nach einem der vorangehenden Ansprüche, **gekennzeichnet durch** Kabel (3), die bidirektional für Übertragung von Bildpunktwerten an die Kamera und in "linebreak" sowie "framebreak" Lücken eingesetzt werden, wobei CMOS Bildsensor (2) die Sendung von Bildpunktwerten für Übertragung von bestimmten Daten von der Kamera (4) zum Sensor (2), wie Ein/Aus-Zeit und Photon-Akkumulationszeit, abbricht.

## Revendications

1. Une caméra de véhicule (1) pour observer les chauffeurs des véhicules à moteur comme voitures, bus, et camions, **comportant** une câble (3) fournissant un signal et transfert de l'énergie, au moins une caméra (4,) placée à l'une des extrémités de la câble (3), utilisée comme l'alimentation électrique et permettant le transfert de l'information et au moins un contrôleur (5) recevant l'information transférée par la caméra (4), **caractérisée par** un capteur d'image CMOS (2) placé sur le pare-brise du véhicule à moteur juste devant la face de chauffeur et à laquelle est liée la câble (3) et au moins une lentille (6) placée sur le capteur (2).

2. Une caméra de véhicule (1) selon la revendication 1, **caractérisée par** au moins quatre câbles (3) pour transférer l'information et le pixel entre la caméra (4) et le capteur (2), dans laquelle deux des câbles sont utilisés pour le transfert de l'énergie et l'autre deux sont utilisées pour le transfert des valeurs de pixel à la caméra par la technique LVDS.

3. Une caméra de véhicule (1) selon l'une quelconque des revendications précédentes, **caractérisée par** les câbles (3) utilisé dans une façon bidirectionnelle pour le transfert des valeurs de pixel à la caméra et dans les ouvertures de « ligne d'interruption » et « cadre d'interruption » dans lesquelles le capteur d'image CMOS (2) arrête l'envoi des valeurs de pixel, pour le transfert de certaines informations comme le temps d'ouverture/fermeture et le temps d'accumulation de photon de la camera (4) au capteur (2).
